# EUROPEAN PATENT APPLICATION

(11) **EP 4 494 458 A1**
(43) Date of publication of application: **22.01.2025**
(21) Application number: 23791902.2
(22) Date of filing: 19.04.2023
(51) Int. Cl.: A01G 23/08, A01G 23/00

(54) **FORESTRY MACHINE AND MONITORING SYSTEM**

(30) Priority: 19.04.2022 JP 2022068988
(71) Applicant: Komatsu Ltd., Minato-ku Tokyo 107-8414 (JP)
(72) Inventor: TOGASHI, Ryoichi, Tokyo 107-8414 (JP); UENO, Mitsuru, Tokyo 107-8414 (JP)
(74) Representative: Global IP Europe Patentanwaltskanzlei
(86) International application number: PCT/JP2023/015656
(87) International publication number: WO 2023/204254

(57) **Abstract**

A forestry machine is provided with work equipment having a cutting tool for felling a tree. A position measurement device measures a position of the forestry machine. A prohibition unit prohibits driving of the work equipment in a case in which the measured position is within a felling prohibition area.

## Description

### [Technical Field]

The present disclosure relates to a forestry machine and a monitoring system.

Priority is claimed on Japanese Patent Application No. 2022-068988, filed April 19, 2022, the content of which is incorporated herein by reference.

### [Background Art]

Forestry machines can efficiently perform tree felling work. Meanwhile, illegal felling in an area in which felling is prohibited, such as a natural forest, is a problem, and there is a demand for preventing the use of forestry machines for illegal felling. Patent Document 1 discloses a technology of unlocking a start-up lock by identifying a driver in order to prevent misuse of a work machine.

### [Citation List]

### [Patent Document]

[Patent Document 1]
Japanese Patent No. 5250912

### [Summary of Invention]

### [Technical Problem]

However, even in a case in which the technology disclosed in Patent Document 1 is applied to a forestry machine, it is not possible to prevent illegal felling in a case in which the identified driver performs illegal felling. An object of the present disclosure is to provide a forestry machine and a monitoring system which can prevent illegal felling.

### [Solution to Problem]

An aspect of the present invention relates to a forestry machine provided with work equipment having a cutting tool for felling a tree, the forestry machine including: a position measurement device that measures a position of the forestry machine; and a prohibition unit that prohibits felling work via the forestry machine in a case in which the measured position is within a felling prohibition area.

### [Advantageous Effects of Invention]

According to the above-described aspect, it is possible to prevent illegal felling.

### [Brief Description of Drawings]

FIG. 1 is a diagram showing a configuration of a monitoring system according to a first embodiment.
FIG. 2 is a schematic block diagram showing a configuration of a monitoring device according to the first embodiment.
FIG. 3 is a configuration diagram showing an appearance of a forestry machine according to the first embodiment.
FIG. 4 is a diagram showing an internal configuration of a cab according to the first embodiment.
FIG. 5 is a schematic block diagram showing a configuration of a control device according to the first embodiment.
FIG. 6 is a flowchart showing an operation determination process via the control device according to the first embodiment.
FIG. 7 is a flowchart showing an operation determination process via a control device according to a second embodiment.
FIG. 8 is a configuration diagram showing an appearance of a forestry machine according to a third embodiment.
FIG. 9 is a flowchart showing an operation determination process via a monitoring system according to the third embodiment.

### [Description of Embodiments]

### <First Embodiment>

### <<Configuration of Monitoring System>>

Hereinafter, embodiments will be described in detail with reference to the drawings.

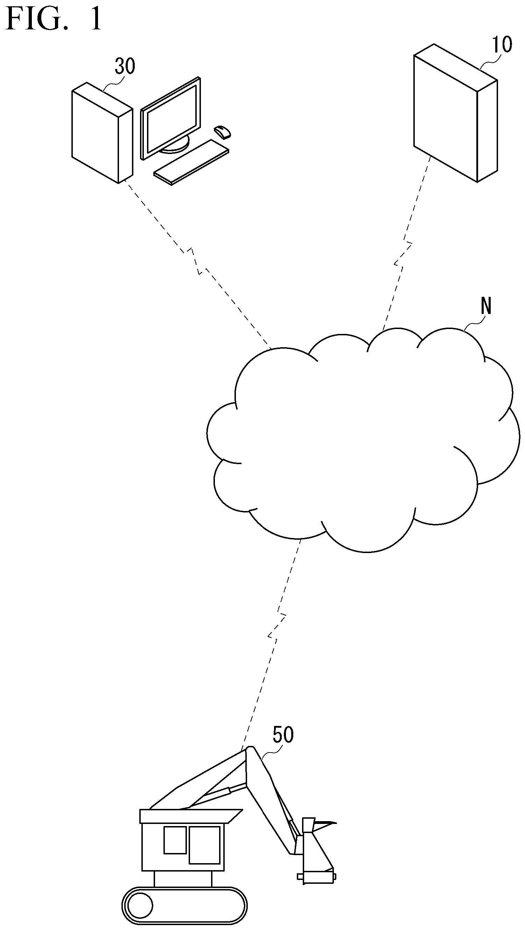

FIG. 1 is a diagram showing a configuration of a monitoring system 1 according to the first embodiment. The monitoring system 1 includes a monitoring device 10, a monitoring officer terminal 30, and a forestry machine 50. The monitoring device 10, the monitoring officer terminal 30, and the forestry machine 50 are connected to each other via a communication network N such as the Internet. In a case in which the forestry machine 50 is in a felling prohibition area, the monitoring system 1 prohibits start-up of an engine of the forestry machine 50 and transmits an alarm to the monitoring officer terminal 30. The monitoring officer terminal 30 is a terminal operated by a monitoring officer who controls illegal felling. As a result, the monitoring system 1 can prevent illegal felling via the forestry machine 50.

The monitoring device 10 receives position information from the forestry machine 50 and determines whether or not the forestry machine 50 is located within the felling prohibition area. The monitoring device 10 transmits a permission notification for permitting the start-up of the engine to the forestry machine 50 in a case in which the forestry machine 50 is not located within the felling prohibition area. On the other hand, in a case in which the forestry machine 50 is located within the felling prohibition area, the monitoring device 10 transmits a prohibition notification for prohibiting the start of the engine of the forestry machine 50.

### <<Configuration of Monitoring Device 10>>

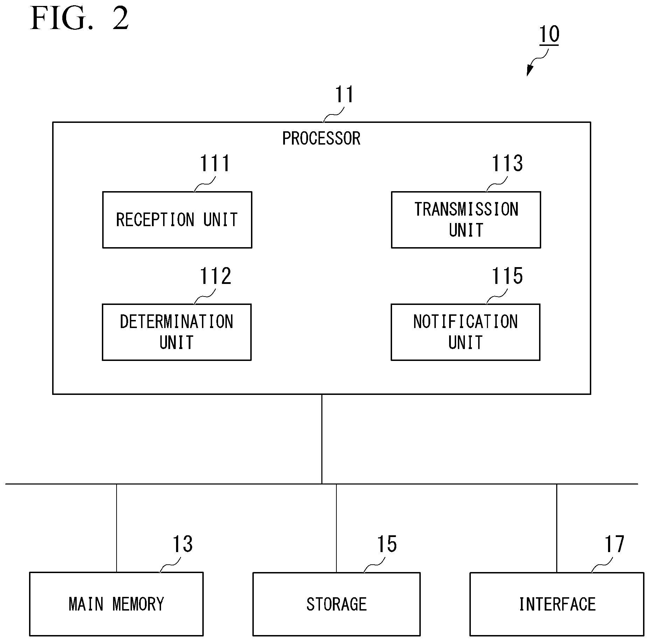

FIG. 2 is a schematic block diagram showing a configuration of the monitoring device 10 according to the first embodiment. The monitoring device 10 is a computer including a processor 11, a main memory 13, a storage 15, and an interface 17. The storage 15 stores a program. The processor 11 reads out the program from the storage 15, loads the program in a main memory 63, and executes a process according to the program.

In another embodiment, the monitoring device 10 may include a custom large-scale integrated circuit (LSI), such as a programmable logic device (PLD), in addition to or instead of the above-described configuration. Exemplary examples of the PLD include a programmable array logic (PAL), a generic array logic (GAL), a complex programmable logic device (CPLD), and a field-programmable gate array (FPGA). In this case, some or all of the functions realized by the processor 11 may be realized by an integrated circuit. The integrated circuit is also included in an example of the processor.

The monitoring device 10 is connected to the communication network N via the interface 67. Exemplary examples of the storage 15 include a hard disk drive (HDD), a solid-state drive (SSD), and a non-volatile memory. The storage 15 may be an internal medium directly connected to a bus of the monitoring device 10, or may be an external medium connected to the control device 14 via the interface 17. The storage 15 is a non-transitory tangible storage medium. The storage 15 records map data indicating the felling prohibition area in advance. The map data is appropriately updated in response to a change in the information on the felling prohibition area.

The processor 11 of the monitoring device 10 executes the program to function as a reception unit 111, a determination unit 112, a transmission unit 113, and a notification unit 114. The reception unit 111 acquires position data from the forestry machine 50. The determination unit 112 determines whether or not the forestry machine 50 is within the felling prohibition area based on the position data received from the forestry machine 50 and the map data related to the felling prohibition area recorded in the storage 15. The determination unit 112 prohibits the operation of the forestry machine 50 in a case in which the forestry machine 50 is within the felling prohibition area. On the other hand, in a case in which the forestry machine 50 is not within the felling prohibition area, the determination unit 112 permits the operation of the forestry machine 50. The determination unit 112 may allow the forestry machine 50 to be operated by not outputting a signal for prohibiting the operation, instead of explicitly permitting the operation of the forestry machine 50. The transmission unit 113 transmits a determination result of the determination unit 112 to the forestry machine 50. The notification unit 114 transmits alarm data indicating that the forestry machine 50 is within the felling prohibition area to the monitoring officer terminal 30 in a case in which the forestry machine 50 is within the felling prohibition area. The alarm data includes identification information and the position data of the forestry machine 50 within the felling prohibition area.

### <<Configuration of Forestry Machine 50>>

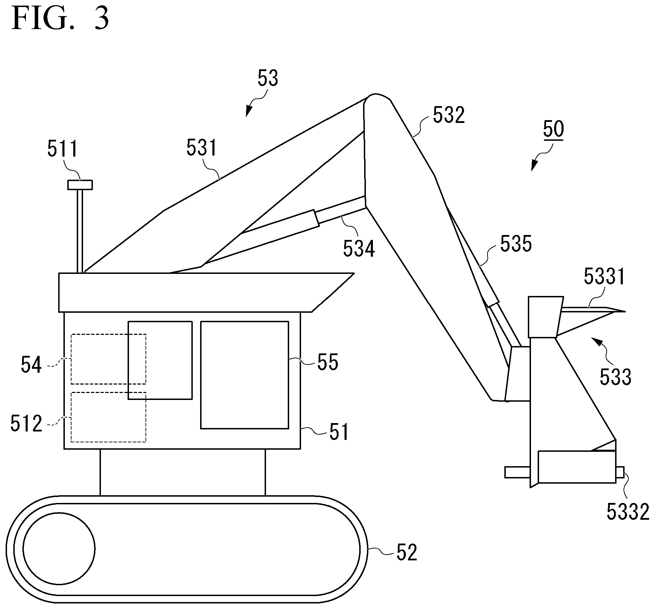

FIG. 3 is a configuration diagram showing an appearance of the forestry machine 50 according to the first embodiment. The forestry machine 50 includes a vehicle body 51, an undercarriage 52, work equipment 53, and a control device 54.

The undercarriage 52 supports the vehicle body 51 to be capable of traveling. The undercarriage 52 is an endless track driven by the power of an engine. Meanwhile, in another embodiment, the undercarriage 52 may include a wheel driven by the power of the engine.

A position measurement device 511 for measuring a position of the vehicle body 51 is provided in the vehicle body 51. The position measurement device 511 includes an antenna that receives a position measurement signal from a GNSS, and measures the position of the vehicle body 51 based on the position measurement signal received via the antenna. The position measurement device 511 outputs position data indicating the measured position to the control device 54. The position of the vehicle body 51 is represented by a three-dimensional global coordinate system. An engine 512, which is a power source of the forestry machine 50, and the engine 512 are mounted in the vehicle body 51.

The work equipment 53 is used for gripping and felling the tree. The work equipment 53 is provided at a front portion of the vehicle body 51. The work equipment 53 includes a boom 531, an arm 532, a head 533, an arm cylinder 534, and a head cylinder 535.

The base end portion of the boom 531 is attached to a rear portion of the vehicle body 51. The boom 531 is rotated by a hydraulic motor (not shown). A base end portion of the arm 532 is attached to a distal end portion of the boom 531 to be rotatable about an axis extending in a width direction of the vehicle body 51. The head 533 is attached to the arm 532 to be rotatable about a first axis extending in the width direction of the vehicle body 51 and rotatable about a second axis orthogonal to the first axis. A grapple 5331 for gripping the tree is provided on an upper portion of the head 533. A circular saw 5332 for felling the tree is provided in parallel with the grapple 5331 at a lower portion of the head 533. The circular saw 5332 is an example of a cutting tool. **In** another embodiment, the work equipment 53 may include a cutting tool other than the circular saw 5332, such as a chain saw or a reciprocating saw.

The arm cylinder 534 and the head cylinder 535 are hydraulic cylinders. A base end portion of the arm cylinder 534 is attached to the boom 531. A distal end portion of the arm cylinder 534 is attached to the arm 532. The arm 532 is raised and lowered by the arm cylinder 534 being expanded and contracted by hydraulic oil. A base end portion of the head cylinder 535 is attached to the arm 532. A distal end portion of the head cylinder 535 is attached to the head 533. The head cylinder 535 is expanded and contracted by the hydraulic oil, whereby the head 533 rotates about the first axis.

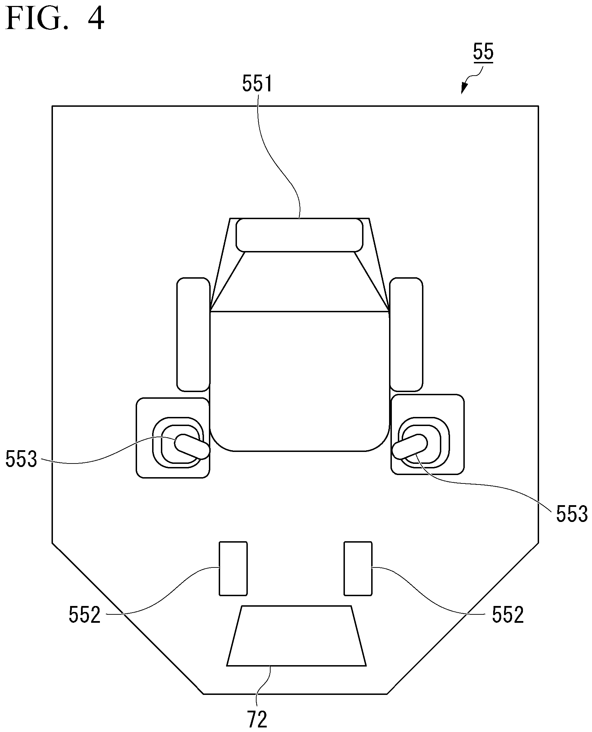

A cab 55 is provided in the vehicle body 51. FIG. 4 is a diagram showing an internal configuration of the cab 55 according to the first embodiment.

The cab 55 is provided with a driver's seat 551, a foot pedal 552, an operation device 553, a start-up switch 554, and a monitor 72. The foot pedal 552 is a device for driving the undercarriage 52 via a manual operation of an operator. The foot pedal 552 is disposed on the floor surface in front of the driver's seat 551. The operation device 553 is a device for driving the work equipment 53 via the manual operation of the operator. The start-up switch 554 is a switch for starting-up the control device 54 and the engine 512.

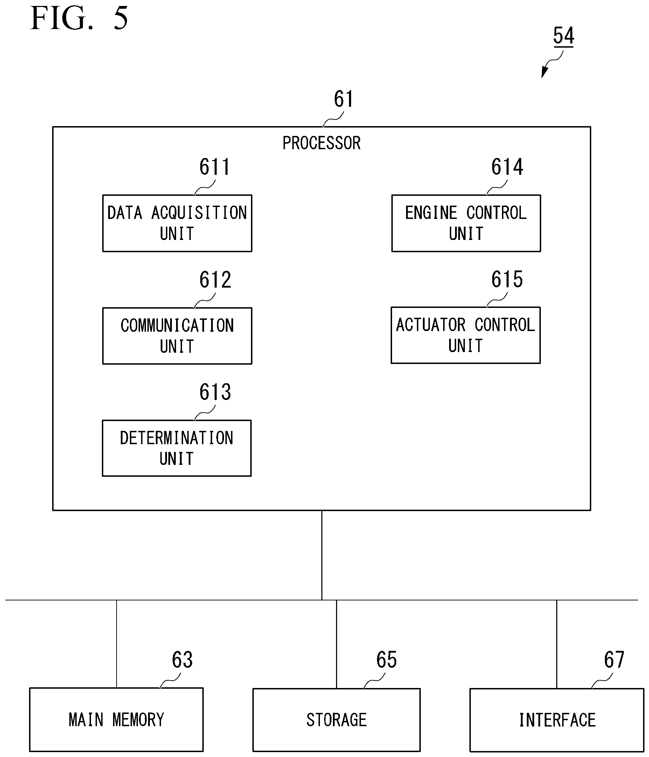

The control device 54 generates a driving signal for driving the undercarriage 52 and the work equipment 53, starts up the engine 512, and performs the communication with the monitoring device 10. FIG. 5 is a schematic block diagram showing a configuration of the control device 54 according to the first embodiment. The control device 54 is a computer including a processor 61, a main memory 63, a storage 65, and an interface 67. The storage 65 stores a program. The processor 61 reads out the program from the storage 65, loads the program in the main memory 63, and executes a process according to the program.

In another embodiment, the control device 54 may include a custom LSI, such as a PLD, in addition to the above-described configuration or instead of the above-described configuration. In this case, some or all of the functions realized by the processor 61 may be realized by an integrated circuit. The integrated circuit is also included in the example of the processor.

The control device 54 is connected to the communication network N and various actuators via the interface 67. In addition, the control device 54 is connected to an input/output device (not shown) via the interface 67.

Exemplary examples of the storage 65 include an HDD, an SSD, and a non-volatile memory. The storage 65 may be an internal medium directly connected to a bus of the control device 54, or may be an external medium connected to the control device 54 via the interface 67. The storage 65 is a non-transitory tangible storage medium.

The processor 61 executes the program to function as a data acquisition unit 611, a communication unit 612, a determination unit 613, an engine control unit 614, and an actuator control unit 615.

The data acquisition unit 611 acquires the position data of the forestry machine 50 from the position measurement device 511.

The communication unit 612 performs the communication with the monitoring device 10. The communication unit 612 transmits the position data to the monitoring device 10 and receives an instruction signal indicating whether or not the operation of the forestry machine 50 is permitted from the monitoring device 10. The communication unit 612 receives the map data indicating the felling prohibition area from the monitoring device 10, and records the map data in the storage 65.

**In** a case in which the communication with the monitoring device 10 is not enabled, the determination unit 613 determines whether or not the operation of the forestry machine 50 is permitted, based on the position data acquired by the data acquisition unit 611 and the map data recorded in the storage 65.

The engine control unit 614 starts up the engine 512 and controls the driving of the engine 512. The engine control unit 614 prohibits the start-up of the engine 512 and stops the engine 512 that is already being driven, based on the instruction signal received from the monitoring device 10 or the determination result of the determination unit 613. When the engine 512 is not driven, the work equipment 53 cannot be driven. That is, the engine control unit 614 is an example of a prohibition unit that prohibits felling work via the forestry machine 50 in a case in which the measured position satisfies a predetermined condition.

The actuator control unit 615 drives the undercarriage 52 and the work equipment 53 based on the operations of the foot pedal 552 and the operation device 553 performed by the operator. The actuator control unit 615 prohibits the driving of the work equipment 53 based on the instruction signal received from the monitoring device 10 or the determination result of the determination unit 613. That is, the actuator control unit 615 is an example of a prohibition unit that prohibits felling work via the forestry machine 50 in a case in which the measured position satisfies the predetermined condition.

### <<Operation of Monitoring System 1>>

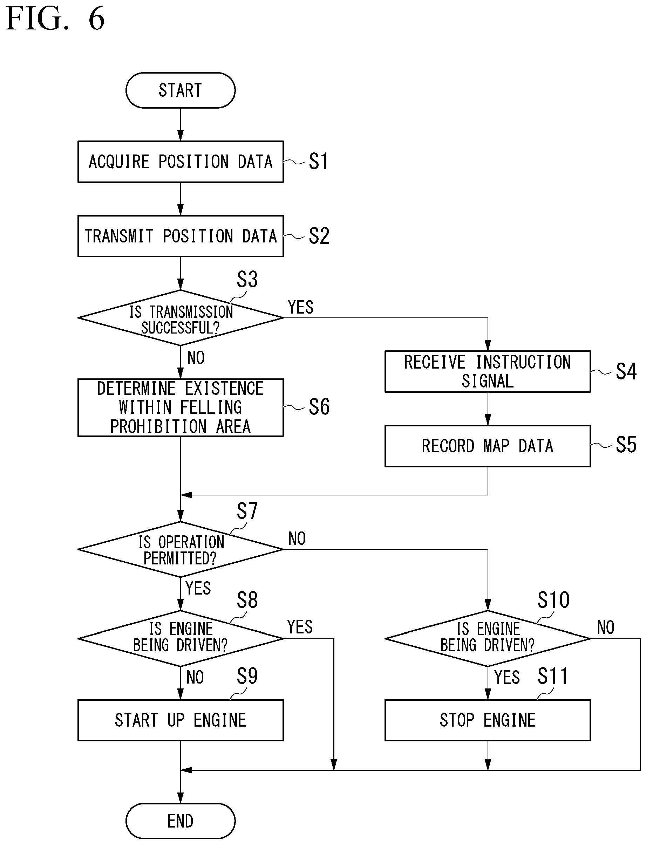

FIG. 6 is a flowchart showing an operation determination process via the control device 54 according to the first embodiment. The control device 54 executes the following operation determination process at a time of the start-up via the start-up switch 554, and at regular time intervals after the start-up. Even in a case in which the start-up switch 554 of the forestry machine 50 is turned on, the engine 512 is not immediately started up, and the control device 54 is first started up.

The data acquisition unit 611 of the control device 54 acquires the position data from the position measurement device 511 (step S1). The communication unit 612 transmits the acquired position data to the monitoring device 10 (step S2). The communication unit 612 determines whether or not the transmission of the position data to the monitoring device 10 is successful (step S3). For example, the communication unit 612 can determine whether or not the data transmission is successful depending on whether or not an "Acknowledge" signal or an instruction signal is received from the monitoring device 10 within a predetermined time, or the like.

In a case in which the transmission of the position data to the monitoring device 10 is successful (step S3: YES), the determination unit 613 of the monitoring device 10 determines whether or not the forestry machine 50 is within the felling prohibition area based on the position data received from the forestry machine 50 and the map data. Then, the transmission unit 113 transmits the instruction signal indicating the determination result and the latest map data to the forestry machine 50. The communication unit 612 of the control device 54 receives the instruction signal and the latest map data from the monitoring device 10 (step S4). The communication unit 612 records the received map data in the storage 65 (step S5). The communication unit 612 may overwrite the map data already recorded in the storage 65 with the latest map data.

In a case in which the transmission of the position data to the monitoring device 10 fails (step S3: NO), the determination unit 112 determines whether or not the forestry machine 50 is within the felling prohibition area based on the position data acquired in step S1 and the map data recorded in the storage 15 (step S6). The determination unit 112 permits the operation of the forestry machine 50 in a case in which the forestry machine 50 is not within the felling prohibition area, and prohibits the operation of the forestry machine 50 in a case in which the forestry machine 50 is within the felling prohibition area.

The engine control unit 614 determines whether or not the instruction signal received in step S4 or the determination result in step S6 indicates permission of the operation of the forestry machine 50 (step S7). In a case in which the instruction signal or the determination result indicates the permission of the operation of the forestry machine 50 (step S7: YES), the engine control unit 614 determines whether or not the engine 512 is already being driven (step S8). In a case in which the engine 512 is not being driven (step S8: NO), the engine control unit 614 drives a starter motor for starting-up the engine 512 via a start-up operation of the operator, and starts up the engine 512 (step S9). In a case in which the start-up switch 554 is a rotary switch, the start-up operation of the operator may be, for example, an operation of rotating the rotary switch to an ignition position. On the other hand, in a case in which the engine 512 is already being driven (step S8: YES), the engine control unit 614 maintains the driving state of the engine 512.

On the other hand, in a case in which the instruction signal or the determination result indicates the prohibition of the operation of the forestry machine 50 (step S7: NO), the engine control unit 614 determines whether or not the engine 512 is already being driven (step S10). In a case in which the engine 512 is not being driven (step S10: NO), the engine control unit 614 maintains a state in which the engine 512 is stopped even when the start-up operation is performed by the operator, that is, prohibits the start-up of the engine 512. On the other hand, in a case in which the engine 512 is already being driven (step S10: YES), the engine control unit 614 controls fuel supply to the engine 512 such that the engine 512 is stopped.

### <<Action and Effect>>

As described above, according to the first embodiment, the forestry machine 50 prohibits the driving of the engine 512, that is, the operation of the forestry machine 50 in a case in which the position measured by the position measurement device 511 satisfies the predetermined condition. Since the forestry machine 50 is not operated in a case in which the position information satisfies the predetermined condition related to illegal felling, the forestry machine 50 can prevent illegal felling using the forestry machine 50. According to the first embodiment, the forestry machine 50 executes the operation determination process at regular time intervals after the start-up. As a result, even in a case in which the forestry machine 50 is started up outside the felling prohibition area and enters the felling prohibition area, the engine 512 can be stopped after entering.

The predetermined condition according to the first embodiment is that the position of the forestry machine 50 is within the felling prohibition area, but another embodiment is not limited to this. For example, the condition according to another embodiment may be that the position of the forestry machine 50 is in the vicinity of the felling prohibition area determined by a country or the like. That is, the "felling prohibition area" according to another embodiment may be a wider area including an actual felling prohibition area determined by the country or the like.

In addition, according to the first embodiment, the forestry machine 50 transmits the position data to the monitoring device 10 connected via the communication network N, and receives the determination result of whether or not the predetermined condition is satisfied from the monitoring device 10. As a result, the forestry machine 50 can determine whether or not the operation is permitted, based on the latest determination condition. In addition, in a case in which the determination is performed by the external monitoring device 10, it is possible to reduce the possibility of tampering with the determination result due to software cracking or the like of the control device 54.

In addition, according to the first embodiment, in a case in which the communication with the monitoring device 10 fails, the forestry machine 50 can determine whether or not the operation is permitted, based on the map data recorded in the internal storage 65. That is, the control device 54 can determine whether or not the operation is permitted regardless of the communication environment. In another embodiment, the control device 54 may prohibit the operation in a case in which the communication with the monitoring device 10 is not enabled. In this case, the control device 54 may prohibit the operation in a case in which the communication fails a predetermined number of times in succession, such that the operation is not stopped due to the temporary deterioration of the communication status, and may permit the operation until the number of failures reaches a predetermined number.

In addition, according to the first embodiment, the control device 54 receives the map data in addition to the instruction signal in a case in which the communication with the monitoring device 10 is successful, and records the map data in the storage 65. Then, the control device 54 performs the determination based on the map data last received from the monitoring device 10. As a result, the control device 54 can perform the determination based on the latest map data even in a case in which the communication environment is poor. The update of the map data may be performed at less frequent periods (for example, once a day) rather than each time the determination is performed by the monitoring device 10.

### <Second Embodiment>

The monitoring system 1 according to the first embodiment prohibits the driving of the engine 512 in a case in which the forestry machine 50 is within the felling prohibition area. On the other hand, in a case in which the driving of the engine 512 is prohibited, it may be difficult to return the forestry machine 50 to an area outside of the felling prohibition area in a case in which the forestry machine 50 mistakenly enters a felling allowed area. The monitoring system 1 according to the second embodiment prohibits the driving of the work equipment 53 while permitting traveling via the undercarriage 52 in a case in which the forestry machine 50 enters the felling prohibition area.

A configuration of the monitoring system 1 according to the second embodiment is the same as the configuration of the monitoring system 1 according to the first embodiment. In the second embodiment, the operations of the engine control unit 614 and the actuator control unit 615 of the control device 54 are different from the operations in the first embodiment.

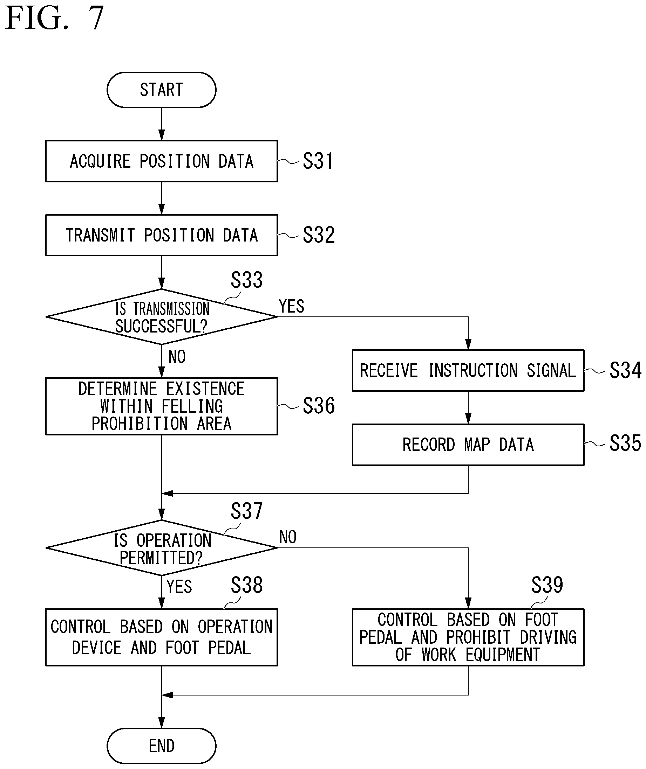

FIG. 7 is a flowchart showing an operation determination process via the control device 54 according to the second embodiment. The control device 54 executes the following operation determination process at a time of the start-up via the start-up switch 554, and at regular time intervals after the start-up. In the forestry machine 50 according to the second embodiment, the control device 54 and the engine 512 are started up in a case in which the start-up switch 554 is turned on. The engine 512 may be started up by the control device 54. In addition, the engine 512 may be configured such that the starter motor is energized by turning on the start-up switch 554.

The data acquisition unit 611 of the control device 54 acquires the position data from the position measurement device 511 (step S31). The communication unit 612 transmits the acquired position data to the monitoring device 10 (step S32). The communication unit 612 determines whether or not the transmission of the position data to the monitoring device 10 is successful (step S33).

In a case in which the transmission of the position data to the monitoring device 10 is successful (step S33: YES), the communication unit 612 receives the instruction signal and the latest map data from the monitoring device 10 (step S34). The communication unit 612 records the received map data in the storage 65 (step S35).

In a case in which the transmission of the position data to the monitoring device 10 fails (step S33: YES), the determination unit 112 determines whether or not the forestry machine 50 is within the felling prohibition area based on the position data acquired in step S31 and the map data recorded in the storage 15 (step S36). The determination unit 112 permits the operation of the forestry machine 50 in a case in which the forestry machine 50 is not within the felling prohibition area, and prohibits the operation of the forestry machine 50 in a case in which the forestry machine 50 is within the felling prohibition area.

The engine control unit 614 determines whether or not the instruction signal received in step S34 or the determination result in step S36 indicates the permission of the operation of the forestry machine 50 (step S37). In a case in which the instruction signal or the determination result indicates the permission of the operation of the forestry machine 50 (step S37: YES), the actuator control unit 615 drives the undercarriage 52 and the work equipment 53 based on the operations of the foot pedal 552 and the operation device 553 (step S38).

On the other hand, in a case in which the instruction signal or the determination result indicates the prohibition of the operation of the forestry machine 50 (step S37: NO), the actuator control unit 615 drives the undercarriage 52 based on the operation of the foot pedal 552. On the other hand, the actuator control unit 615 does not drive the work equipment 53 even in a case in which the operation device 553 is operated (step S39).

### <<Action and Effect>>

As described above, according to the second embodiment, the forestry machine 50 permits the driving of the undercarriage 52 and prohibits the driving of the work equipment 53 in a case in which the position measured by the position measurement device 511 satisfies the predetermined condition. Since the work equipment 53 is not being driven in a case in which the position information satisfies the predetermined condition related to illegal felling, the forestry machine 50 can prevent illegal felling using the forestry machine 50. On the other hand, since the driving of the undercarriage 52 is permitted, the operator can cause the forestry machine 50 to travel and can move the forestry machine 50 out of the felling prohibition area. According to the second embodiment, the forestry machine 50 executes the operation determination process at regular time intervals after the start-up. As a result, the work equipment 53 can be driven in a case in which the forestry machine 50 is in the outside the felling prohibition area, and the work equipment 53 is not driven after entering the felling prohibition area.

According to the second embodiment, the forestry machine 50 unconditionally drives the engine 512 at start-up, but the present disclosure is not limited to this. For example, at the start-up of the forestry machine 50, it may be determined whether or not to start up the engine 512 based on the position information, as in the first embodiment. This is because there is a possibility that the forestry machine 50 mistakenly enters the felling prohibition area via traveling itself in a case in which the forestry machine 50 is in operation, whereas there is a high possibility that the forestry machine 50 is intentionally brought into the felling prohibition area in a case in which the forestry machine 50 is started up within the felling prohibition area.

In addition, according to the second embodiment, the control device 54 prohibits the driving of the work equipment 53 in a case in which the predetermined condition is satisfied. On the other hand, in another embodiment, the control device 54 may at least prohibit the driving of the circular saw 5332. In a case in which the circular saw 5332 is not driven, the control device 54 can prevent the felling via the forestry machine 50. In addition, according to the second embodiment, the control device 54 prohibits the driving of the work equipment 53 by not outputting the driving signal regardless of the operation of the operation device 553, but the present disclosure is not limited to this. For example, the control device 54 according to another embodiment may prohibit the driving of the work equipment 53 by stopping a pump or a motor that supplies hydraulic oil to the work equipment 53, or may prohibit the driving of the work equipment 53 by stopping an electromagnetic valve for operating the work equipment 53. The control device 54 prohibits the driving of the work equipment 53 based on the instruction signal received from the monitoring device 10 or the determination result of the determination unit 613. That is, the control device 54 is an example of a prohibition unit that prohibits felling work via the forestry machine 50 in a case in which the measured position satisfies the predetermined condition.

### <Third Embodiment>

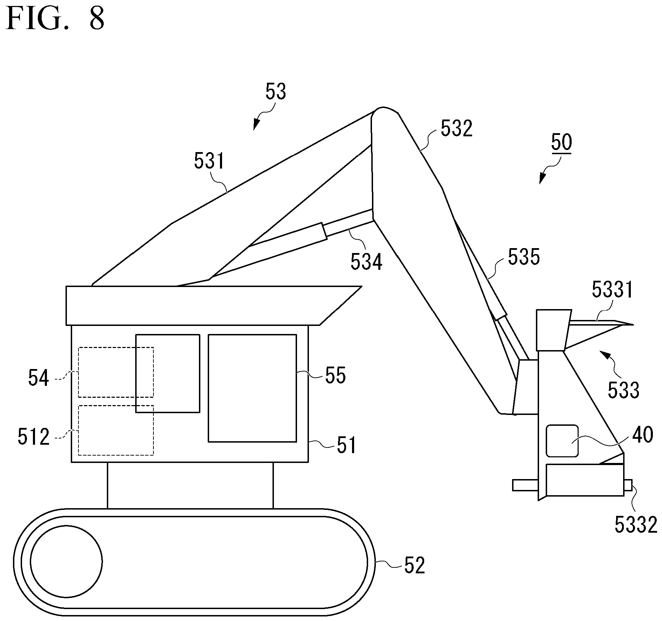

FIG. 8 is a configuration diagram showing an appearance of the forestry machine 50 according to the third embodiment. The forestry machine 50 of the monitoring system 1 according to the third embodiment is different from the forestry machine 50 of the monitoring system 1 according to the first and second embodiments in that the position data is not transmitted to the monitoring device 10 and the instruction is not received from the monitoring device 10. That is, the forestry machine 50 according to the third embodiment need not include the position measurement device 511.

The monitoring system 1 according to the third embodiment includes a tracker 40 that is attachable to the forestry machine 50. The tracker 40 includes an antenna that receives a position measurement signal from the GNSS, and measures a position of the tracker 40 based on the position measurement signal received via the antenna. The tracker 40 is attached to the forestry machine 50, whereby the tracker 40 can measure the position of the forestry machine 50. The tracker 40 is connected to the monitoring device 10 via the communication network N and transmits the measured position data to the monitoring device 10. The tracker 40 shown in FIG. 8 is attached to the head 533, but the present disclosure is not limited to this. For example, the tracker 40 according to another embodiment may be attached to a body of the forestry machine 50. The tracker 40 is provided with a built-in battery (not shown), and can operate without receiving a power supply from the outside. The tracker 40 according to another embodiment need not include the battery and may be operated by receiving a power supply from the body of the forestry machine 50.

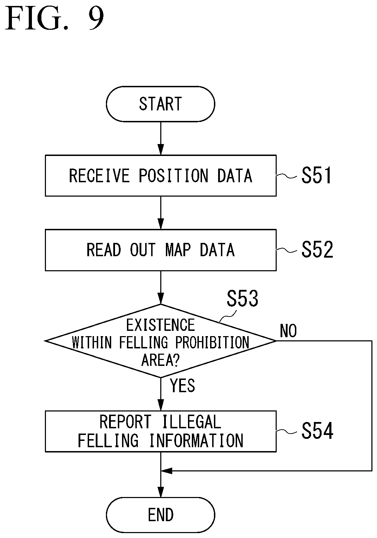

FIG. 9 is a flowchart showing an operation determination process via the monitoring system 1 according to the third embodiment. The tracker 40 acquires the position data at regular time intervals and transmits the acquired position data to the monitoring device 10.

The monitoring device 10 receives the position data from the tracker 40 (step S51). The monitoring device 10 reads out the latest map data from the storage 15 (step S52). The monitoring device 10 determines whether or not the forestry machine 50 is within the felling prohibition area based on the received position data and the map data (step S53). In a case in which the forestry machine 50 is within the felling prohibition area (step S53: YES), the monitoring device 10 reports illegal felling information indicating a possibility of illegal felling to an administrative agency (such as the police) having jurisdiction over the felling prohibition area (step S54). In this case, illegal felling information may include the position data received in step S1 and the information on the forestry machine 50.

### <<Action and Effect>>

As described above, according to the third embodiment, in a case in which the position measured by the tracker 40 satisfies the predetermined condition, the monitoring device 10 can report illegal felling to the administrative agency. As a result, even in a case in which the forestry machine 50 does not have position data acquisition means or does not have communication means with the monitoring device 10, the monitoring device 10 can detect illegal felling via the forestry machine 50 and prevent illegal felling via the forestry machine 50.

According to the third embodiment, the monitoring device 10 immediately reports to the administrative agency in a case in which the position indicated by the position data is within the felling prohibition area, but the present disclosure is not limited to this. For example, in a case in which the position data is within the felling prohibition area for a predetermined time or longer and the movement speed is lower than a predetermined threshold value, the monitoring device 10 may report to the administrative agency. As a result, it is possible to prevent the report to the administrative agency in a case in which the forestry machine 50 simply passes through the felling prohibition area.

The monitoring system 1 according to another embodiment may be configured as follows.

The tracker 40 is attached to the head 533. The tracker 40 includes a control device that can detect a GNSS position, communicate with the monitoring device 10, and control a felling operation (saw driving) via the head 533 by using the electromagnetic valve or the like.

In a case in which the position data is detected, the tracker 40 transmits the position data to the monitoring device 10. In a case in which the monitoring device 10 determines that the forestry machine 50 is within the felling prohibition area based on the transmitted position data, the monitoring device 10 transmits an instruction to prohibit the felling operation of the head 533 to the tracker 40. In a case in which the tracker 40 receives the instruction to prohibit the felling operation from the monitoring device 10, the control device of the tracker 40 drives the electromagnetic valve or the like to stop the felling operation via the head 533.

### <Another Embodiment>

Although the embodiments have been described in detail with reference to the drawings, a specific configuration is not limited to the above-described configuration, and various design changes and the like can be made. That is, in another embodiment, the order of the above-described processes may be changed as appropriate. In addition, some processes may be executed in parallel.

In the monitoring system 1 according to the above-described embodiment, the monitoring device 10 and the control device 54 cooperate with each other to perform the process. On the other hand, in the monitoring system 1 according to another embodiment, the control device 54 may have the function of the monitoring device 10 and may be configured as a single computer. That is, the control device 54 may determine whether or not the operation is permitted, always based on the map data recorded in the storage 65 without performing the communication via the communication network N.

In another embodiment, the monitoring device 10 or the control device 54 may be configured by being divided into a plurality of computers and may function by the plurality of computers cooperating with each other. In this case, some of the computers constituting the control device 54 may be mounted inside the forestry machine 50, and the other computers may be provided outside the forestry machine 50.

### (Supplementary Note 1)

A forestry machine provided with work equipment having a cutting tool for felling a tree, the forestry machine including: a position measurement device that measures a position of the forestry machine; and a prohibition unit that prohibits felling work via the forestry machine in a case in which the measured position is within a felling prohibition area.

### (Supplementary Note 2)

The forestry machine according to Supplementary Note 1, further including: an undercarriage that travels together with the work equipment, in which the undercarriage is drivable in a case in which driving of the work equipment is prohibited by the prohibition unit.

### (Supplementary Note 3)

The forestry machine according to Supplementary Note 1, in which the prohibition unit is that prohibits an engine, which is a power source of the work equipment, from being started up in a case in which the measured position is within the felling prohibition area.

### (Supplementary Note 4)

The forestry machine according to any one of Supplementary Notes 1 to 3, further including: a determination unit that determines whether or not the position is within the felling prohibition area based on map data indicating the felling prohibition area and the measured position, in which the prohibition unit is that prohibits felling work via the forestry machine in a case in which the determination unit determines that the position is within the felling prohibition area.

### (Supplementary Note 5)

The forestry machine according to any one of Supplementary Notes 1 to 3, further including: a communication unit that transmits position information indicating the position to a monitoring device that determines whether or not the position is within the felling prohibition area based on the position information, and receive a determination result, in which the prohibition unit is that prohibits felling work via the forestry machine in a case in which the determination result indicates that the position is within the felling prohibition area.

### (Supplementary Note 6)

The forestry machine according to Supplementary Note 5, further including: a determination unit that determines whether or not the position is within the felling prohibition area based on map data indicating the felling prohibition area and the measured position, in which, when communication with the monitoring device is enabled, the prohibition unit prohibits driving of the work equipment in a case in which the determination result received from the monitoring device indicates that the position is within the felling prohibition area, and, when the communication with the monitoring device is not enabled, the prohibition unit prohibits felling work via the forestry machine in a case in which a determination result of the determination unit indicates that the position is within the felling prohibition area.

### (Supplementary Note 7)

The forestry machine according to Supplementary Note 6, in which the communication unit is that receives the map data from the monitoring device, and the determination unit is that performs the determination based on the map data last received from the monitoring device.

### [Industrial Applicability]

According to the above-described aspect, it is possible to prevent illegal felling.

### [Reference Signs List]

1: Monitoring system
10: Monitoring device
11: Processor
111: Reception unit
112: Determination unit
113: Transmission unit
114: Notification unit
13: Main memory
15: Storage
17: Interface
30: Monitoring officer terminal
50: Forestry machine
51: Vehicle body
511: Position measurement device
512: Engine
52: Undercarriage
53: Work equipment
531: Boom
532: Arm
533: Head
5331: Grapple
5332: Circular saw
534: Arm cylinder
535: Head cylinder
54: Control device
55: Cab
55: Cab
551: Driver's seat
552: Foot pedal
553: Operation device
554: Start-up switch
72: Monitor
61: Processor
611: Data acquisition unit
612: Communication unit
613: Determination unit
614: Engine control unit
615: Actuator control unit
63: Main memory
65: Storage
67: Interface
N: Communication network

## Claims

1. A forestry machine provided with work equipment having a cutting tool for felling a tree, the forestry machine comprising:
a position measurement device that measures a position of the forestry machine; and
a prohibition unit that prohibits felling work via the forestry machine in a case in which the measured position is within a felling prohibition area.

2. The forestry machine according to Claim 1, further comprising:
an undercarriage that travels together with the work equipment,
wherein the undercarriage is drivable in a case in which driving of the work equipment is prohibited by the prohibition unit.

3. The forestry machine according to Claim 1,
wherein the prohibition unit prohibits an engine, which is a power source of the work equipment, from being started up in a case in which the measured position is within the felling prohibition area.

4. The forestry machine according to any one of Claims 1 to 3, further comprising:
a determination unit that determines whether or not the position is within the felling prohibition area based on map data indicating the felling prohibition area and the measured position,
wherein the prohibition unit prohibits felling work via the forestry machine in a case in which the determination unit determines that the position is within the felling prohibition area.

5. The forestry machine according to any one of Claims 1 to 3, further comprising:
a communication unit that transmits position information indicating the position to a monitoring device that determines whether or not the position is within the felling prohibition area based on the position information, and receive a determination result,
wherein the prohibition unit prohibits felling work via the forestry machine in a case in which the determination result indicates that the position is within the felling prohibition area.

6. The forestry machine according to Claim 5, further comprising:
a determination unit that determines whether or not the position is within the felling prohibition area based on map data indicating the felling prohibition area and the measured position,
wherein, when communication with the monitoring device is enabled, the prohibition unit prohibits driving of the work equipment in a case in which the determination result received from the monitoring device indicates that the position is within the felling prohibition area, and,
when the communication with the monitoring device is not enabled, the prohibition unit prohibits felling work via the forestry machine in a case in which a determination result of the determination unit indicates that the position is within the felling prohibition area.

7. The forestry machine according to Claim 6,
wherein the communication unit receives the map data from the monitoring device, and
the determination unit performs the determination based on the map data last received from the monitoring device.

8. A monitoring system comprising:
a forestry machine provided with work equipment having a cutting tool for felling a tree; and
a monitoring device that monitors the forestry machine,
wherein the forestry machine includes
a position measurement device that measures a position of the forestry machine,
a communication unit that transmits the measured position to the monitoring device and receives a determination result of whether or not the position is within a felling prohibition area, and
a prohibition unit that prohibits felling work via the forestry machine in a case in which the determination indicates that the measured position is within the felling prohibition area, and
the monitoring device includes
a reception unit that receives the measured position from the forestry machine,
a determination unit that determines whether or not the position is within the felling prohibition area based on map data indicating the felling prohibition area and the received position, and
a transmission unit that transmits a determination result of the determination unit to the forestry machine.

9. A monitoring system that monitors a forestry machine provided with work equipment having a cutting tool for felling a tree, the monitoring system comprising:
a tracker including:
a position measurement device that provides in the forestry machine and measures a position of the forestry machine;
a communication unit that transmits the measured position to a monitoring device and receives a determination result of whether or not the position is within a felling prohibition area; and
a prohibition unit that prohibits felling work via the cutting tool in a case in which the measured position is within the felling prohibition area; and
a monitoring device including:
a reception unit that receives the measured position from the tracker;
a determination unit that determines whether or not the position is within the felling prohibition area based on map data indicating the felling prohibition area and the received position; and
a transmission unit that transmits a determination result of the determination unit to the tracker.

10. A monitoring system that monitors a forestry machine provided with work equipment having a cutting tool for felling a tree, the monitoring system comprising:
a reception unit that receives a position of the forestry machine;
a determination unit that determines whether or not the position is within a felling prohibition area based on map data indicating the felling prohibition area and the received position; and
an output unit that outputs information indicating a possibility of illegal felling in a case in which it is determined that the position is within the felling prohibition area.
